## Europäisches Patentamt

## European Patent Office

## Office européen des brevets

(11) Publication number: **0 322 018**
**A2**

## EUROPEAN PATENT APPLICATION

(21) Application number: **88202805.3**

(22) Date of filing: **07.12.88**

(51) Int. Cl.4: **C08G 67/02**

(30) Priority: **09.12.87 NL 8702971**

(43) Date of publication of application:
**28.06.89 Bulletin 89/26**

(84) Designated Contracting States:
**AT BE CH DE ES FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**
Inventor: **Wife, Richard Lewin**
**Badhuisweg 3**
**NL-1031 CM Amsterdam(NL)**

(74) Representative: **Aalbers, Onno et al**
**P.O. Box 302**
**NL-2501 CH The Hague(NL)**

(54) Polyketone polymer preparation.

(57) Polyketone polymers of carbon monoxide and a $C_{3-10}$ alpha-olefin are prepared by polymerization in the presence of a catalyst composition based on a palladium compound, a non-noble transition metal salt of an acid having a pKa below 2, and a bisphosphine of formula $R^5 R^6 P-R-PR^7 R^8$ containing polar substituents in the ortho-positions of at least $R^5$ and $R^7$, which catalyst composition is dissolved in a specific diluent mixture which comprises at least 75 %v of a specified tertiary alcohol or hydrocarbon, and at least 5 %v of a specified aliphatic primary alcohol.

EP 0 322 018 A2

## POLYKETONE POLYMER PREPARATION

The invention relates to a process for the preparation of copolymers of carbon monoxide with an alpha-olefin, also known as polyketones.

Linear alternating copolymers of carbon monoxide with ethene can be prepared by using a catalyst composition on the basis of

a) a palladium compound,

b) an anion of an acid with a pKa of less than 6, and

c) a bisphosphine of the general formula $R^1R^2P-R-PR^3R^4$,

wherein $R^1$, $R^2$, $R^3$ and $R^4$ represent similar or different aryl groups which may or may not be substituted with polar groups and R represents a bivalent organic bridging group containing at least two carbon atoms in the bridge.

The preparation is carried out by contacting the monomers at an elevated temperature and pressure with a solution of the catalyst composition in a diluent in which the polymers are insoluble or virtually insoluble.

In the polymer preparation mentioned hereinbefore, both reaction rates and molecular weights of the polymers formed play an important role. On the one hand, it is desirable that the reaction rates achieved in the polymer preparation be as high as possible and on the other hand, the polymers will have a higher value with a view to their possible uses as their molecular weights are higher. Both reaction rates and molecular weights can be influenced by the temperature applied during polymerization. Unfortunately, the effects which the temperature has on the reaction rates and on the molecular weights are opposed to one another, in that, at otherwise similar reaction conditions, an increase in reaction temperature leads to an increase in reaction rates but to a decrease in the molecular weights of the polymers obtained. In actual practice, the trend is to conduct the polymerization at such a temperature that a reaction rate of at least 0.1 kg copolymer/g palladium.hour is achieved, while at the same time the average molecular weight of the polymers obtained is at least 5000.

In an earlier investigation carried out by the Applicant into the above-mentioned polymerization, it was found that when the minimum requirements for reaction rates and average molecular weights mentioned above are taken as starting point, a wide range of variations is available regarding both the components present in the catalyst composition and the diluent in which the polymerization is carried out. The anion occurring in the catalyst composition as component b) may be taken up in the catalyst composition either in the form of an acid or in the form of a salt. Eligible salts are both main group metal salts, such as tin, aluminium and antimony salts and non-noble transition metal salts, such as copper, nickel and iron salts. Eligible acids whose anions should be present in the catalyst compositions as components b) are not only strong acids with a pKa of less than 2 (determined in aqueous solution at 18° C), such as perchloric acid, trifluoro acetic acid, and para-toluenesulphonic acid, but also moderately strong acids with a pKa of from 2 to 4, such as phosphoric acid, tartaric acid, and 2,5-dihydroxybenzoic acid. Weaker acids with a pKa of from 4 to 6, such as acetic acid, may also be eligible as components b), depending on the bisphosphine chosen for component c). As regards the bisphosphines which should be taken up in the catalyst compositions as components c), both bisphosphines in which the aryl groups $R^1$, $R^2$, $R^3$ and $R^4$ contain no polar substituents and bisphosphines in which one or more of the aryl groups $R^1$, $R^2$, $R^3$ and $R^4$ contain one or more polar substituent are eligible for the purpose. Likewise, a wide range of choices is available in respect of the diluent in which the polymerization is carried out. Examples of suitable diluents are mono-alcohols, such as methanol, ethanol and propanol, aromatic hydrocarbons, such as toluene, aliphatic esters, such as ethyl acetate and methyl propionate, ketones, such as acetone and methyl ethyl ketone, ethers, such as anisole, glycoles, such as ethylene glycol, and glycol ethers, such as the dimethyl ether of diethylene glycol. For the purpose in question, both single diluents and compound diluents, such as alcohol/ketone mixtures, are suitable.

Linear alternating copolymers of carbon monoxide with ethene have very high melting points. These polymers should be worked up in molten condition, with the material being handled at a temperature lying at least 25° C above the melting point. These polymers have been found to be rather instable in the presence of the high temperatures required in their working-up, which may lead to discoloration and disintegration. In an earlier investigation carried out by the Applicant, it was found that the melting points of these polymers could be reduced considerably by taking up in the monomer mixture from which the polymers are prepared a small amount of an alpha-olefin having at least 3 and at most 10 carbon atoms in the molecule (for the sake of brevity referred to as $C_{3-10}$ alpha-olefin), as a third monomer. According as more of the third monomer is taken up in the monomer mixture, the terpolymers obtained will have lower melting points. The investigation has further shown that when the minimum requirements for reaction rates and average molecular weights are upheld, it also holds that in the preparation of terpolymers of carbon monoxide with ethene and with a $C_{3-10}$ alpha-olefin, a wide range of variations is possible where the components present in the catalyst composition and the diluents are concerned, which range corresponds substantially with that described hereinbefore for the carbon monoxide/ethene copolymers.

The Applicant has recently carried out an investigation in order to examine whether copolymers of carbon monoxide with a $C_{3-10}$ alpha-olefin can be prepared by using catalyst compositions and diluents as mentioned hereinbefore while upholding the minimum criteria laid down earlier. This investigation has shown that, barring a few exceptions, it is impossible to prepare copolymers of carbon monoxide and a $C_{3-10}$ alpha-olefin while at the same time upholding the two minimum criteria mentioned earlier, by using the diluents and combinations of catalyst components mentioned hereinbefore. It was found to be possible, however, when the following three requirements regarding the catalyst composition and the diluent employed were met:

    1) the component b) used in the catalyst composition should be a non-noble transition metal salt of an acid with a pKa of less than 2,

    2) the component c) used in the catalyst composition should be a bisphosphine of the general formula $R^5 R^6 P-R-PR^7 R^8$, wherein $R^5$, $R^6$, $R^7$ and $R^8$ represent similar or different aryl groups, with at least $R^5$ and $R^7$ each containing one or more polar substituents of which at least one per aryl group is in a position ortho to the phosphorus atom to which the aryl group concerned is bound, and wherein R has the meaning described hereinbefore, and

    3) the diluent used should consist for at least 75 %v of one or more aliphatic tertiary mono-alcohols containing at most 10 carbon atoms per molecule and/or of one or more aromatic hydrocarbons containing at most 10 carbon atoms per molecule, and for at least 5 %v of one or more aliphatic primary alcohols containing at most 10 carbon atoms per molecule.

The present patent application therefore relates to a process for the preparation of polymers, in which process a mixture of carbon monoxide with a $C_{3-10}$ alpha-olefin is polymerized by contacting the mixture with a catalyst composition on the basis of

    a) a palladium compound.

    b) a non-noble transition metal salt of an acid with a pKa of less than 2, and

    c) a bisphosphine of the general formula $R^5 R^6 P-R-PR^7 R^8$ wherein $R^5$, $R^6$, $R^7$ and $R^8$ represent similar or different aryl groups with at least $R^5$ and $R^7$ each containing one or more polar substituents of which at least one per aryl group is in ortho position relative to the phosphorus atom to which the aryl group concerned is bound, and wherein R is a bivalent organic bridging group containing at least two carbon atoms in the bridge, which catalyst composition is dissolved in a diluent which consists for at least 75 %v of one or more aliphatic tertiary mono-alcohols containing at most 10 carbon atoms per molecule and/or of one or more aromatic hydrocarbons containing at most 10 carbon atoms per molecule, and for at least 5 %v of one or more aliphatic primary alcohols containing at most 10 carbon atoms per molecule.

The process according to the invention is preferably carried out at a temperature of from 40 to 120° C, an overall pressure of from 20 to 150 bar, and by using a quantity of catalyst composition which, per mol of $C_{3-10}$ alpha-olefin to be polymerized, contains $10^{-7}$ to $10^{-3}$ gram atom of palladium. Specific preference is given to a process which is carried out at a temperature of from 50 to 100° C, an overall pressure of from 30 to 100 bar and by using a quantity of catalyst composition which, per mol of $C_{3-10}$ alpha-olefin to be polymerized, contains $10^{-6}$ to $10^{-4}$ gram atom of palladium. Examples of suitable $C_{3-10}$ alpha-olefins are propene, butene-1, hexene-1, and octene-1. It is preferred to use propene as the alpha-olefin.

As exemplary aliphatic tertiary mono-alcohols with at most 10 carbon atoms per molecule which may form a component of the diluent used, may be mentioned tert.butyl alcohol and tert.amyl alcohol. As exemplary aromatic hydrocarbons with at most 10 carbon atoms per molecule which may form a component of the diluent used, may be mentioned toluene and xylene. As exemplary aliphatic primary alcohols with at most 10 carbon atoms per molecule which may form a component of the diluent used, may be mentioned methanol, ethanol, propanol-1, butanol-1 and glycol. Preference is given to the use of diluents containing at least 75 %v of tert.butyl alcohol and/or toluene, and at least 5 %v of methanol. The polymerization according to the invention may be carried out either batchwise or continuously.

The palladium compound employed in the catalyst compositions as component a) is preferably a palladium salt of a carboxylic acid, and palladium acetate in particular. Examples of suitable acids with a pKa of less than 2 (determined in aqueous solution at 18° C) are sulphuric acid, perchloric acid, sulphonic acids, such as methane sulphonic acid, trifluoromethane sulphonic acid and para-toluenesulphonic acid, and carboxylic acids, such as trichloroacetic acid, difluoro acetic acid and trifluro acetic acid. It is preferred to use a non-noble transition metal salt of perchloric acid as component b). Preferably, the quantity of component b) present in the catalyst compositions is of from 0.5 to 50 and in particular of from 1 to 25 mol per gram atom of palladium.

In the present patent application, non-noble transition metals should be taken to be all transition metals, including the actinides and lanthanides but excluding the noble metals ruthenium, osmium, rhodium, iridium, palladium, platinum, silver and gold. Examples of transition metals whose salts can very suitably be used as components b) in the catalyst compositions are the Group 4B metal zirconium, the Group 5B metal vanadium, the Group 6B metal chromium, the Group 7B metal manganese, the Group 8 metals iron and nickel, the Group 1B metal copper, the Group 2B metal zinc, the lanthanide cerium and the actinide thorium. Preferably, a nickel salt is taken up in the catalyst composition as component b).

In the bisphosphines of the general formula $R^5 R^5 P-R-PR^7 R^8$ which are eligible for use as components c) in the catalyst compositions, the aryl groups $R^5$, $R^6$, $R^7$ and $R^8$ are preferably phenyl groups in which at least the groups $R^5$ and $R^7$ each contain one or more polar substituents of which at least one per phenyl group is in a position ortho to the phosphorus atom to which the phenyl group concerned is bound. As polar substituents which may occur in the groups $R^5$ and $R^7$ and optionally also in groups $R^6$ and $R^8$, may be mentioned, inter alia, alkoxy groups, such as methoxy groups and thioalkyl groups, such as thiomethyl groups. Preferred is the use of bisphosphines in which the polar substituents are alkoxy groups and in particular methoxy groups. As for the bridging groups R present in the bisphosphines, preference is given to briging groups containing three atoms in the bridge at least two of which are carbon atoms. Examples of suitable bridging groups are the -CH2-CH2-CH2-group, the -CH2-C(CH3)2-CH2-group and the -CH2-Si(CH3)2-CH2-group.

If the bisphosphines used in the process of the invention are bisphosphines in which each one of the groups $R^5$, $R^6$, $R^7$ and $R^8$ contains one or more polar substituents, preference is given to bisphosphines in which the groups $R^5$, $R^6$, $R^7$ and $R^8$ are the same.
Examples of such bisphosphines are
1,3-bis[bis(2-methoxyphenyl)phosphino]propane,
1,3-bis[bis(2,4-dimethoxyphenyl)phosphino]-propane,
1,3-bis[bis(2,6-dimethoxyphenyl)phosphino]-propane, and
1,3-bis[bis(2,4,6-trimethoxyphenyl)phosphino]-propane.

If in the preparation of the invention a bis-phosphine is used in which the groups $R^5$, $R^6$, $R^7$ and $R^8$ are the same, preference is given to the use of 1,3-bis[bis(2-methoxyphenyl)phosphino]-propane. The bis-phosphines are preferably employed in the catalyst compositions in a quantity of from 0.5 to 2 and in particular of from 0.75 to 1.5 mol per gram atom of palladium.

It is preferred also to include a 1,4-quinone in the catalyst compositions employed in the process of the invention, as a component d). 1,4-Benzoquinones and 1,4-naphthoquinones are very suitable for this purpose. The amount of 1,4-quinone used is preferably 5-5000 and in particular 10-1000 mol per gram atom of palladium.

The invention will now be illustrated with the aid of the following examples.

Example 1

A carbon monoxide/ethene copolymer was prepared as follows. A mechanically stirred autoclave with a volume of 300 ml was charged with 200 ml of methanol. After the contents of the autoclave were brought to 65° C, ethene and carbon monoxide were introduced in such quantities that both the ethene partial pressure and the carbon monoxide partial pressure were 15 bar. Subsequently, a catalyst solution was introduced into the autoclave which comprised
23.5 ml methanol,
1.5 ml toluene,
0.06 mmol palladium acetate,
0.3 mmol nickel perchlorate,
0.07 mmol
1,3-bis[bis(2-methoxyphenyl)phosphino]propane, and
3 mmol 1,4-naphthoquinone.

The pressure inside the autoclave was kept up by pressing in a 1:1 carbon monoxide/ethene mixture. After 1 hour the polymerization was terminated by cooling the reaction mixture to room temperature and releasing the pressure. The copolymer was filtered off, washed with methanol and dried at 70° C.

The yield was 22.3 g of copolymer of an average molecular weight over 50000. The polymerization rate was 3.5 kg copolymer/g palladium.hour.

Example 2

A carbon monoxide/propene copolymer was prepared as follows. A mechanically stirred autoclave with a volume of 300 ml was charged with 75 ml of methanol. The autoclave was pressurized with carbon monoxide to a pressure of 20 bar, after which 75 ml of propene was added to the contents of the autoclave. After the contents of the autoclave were brought to 45° C, a catalyst solution of the same composition as mentioned in Example 1 was added. The pressure inside the autoclave was kept up by pressing in carbon monoxide. After 8 hours the polymerization was terminated by cooling the reaction mixture to room temperature and releasing the pressure. The copolymer was isolated by evaporation of the reaction mixture.

The yield was 5 g of copolymer of an average molecular weight of between 3000 and 4000. The polymerization rate was 0.1 kg copolymer/g palladium.hour.

Example 3

A carbon monoxide/propene copolymer was prepared substantially in the same way as the copolymer of Example 2, the differences being

a) 130 ml of tertiary butanol instead of 75 ml of methanol was introduced into the autoclave,

b) the reaction temperature was 65° C instead of 45° C,

c) the catalyst solution contained 11 ml instead of 23.5 ml of methanol,

d) the reaction time was 5 hours instead of 8 hours, and

e) the copolymer was isolated from the reaction product by separating the polymer layer from the solvent layer and removing the residual solvent from the polymer layer in vacuo.

The yield was 10 g of copolymer of an average molecular weight of between 6000 and 7000. The polymerization rate was 0.3 kg copolymer/g palladium.hour.

Example 4

A carbon monoxide/propene copolymer was prepared substantially in the same way as the copolymer of Example 3, the differences being

a) the reaction temperature was 41° C instead of 65° C,

b) the catalyst solution contained 12.5 ml instead of 11 ml of methanol and 20 ml instead of 1.5 ml of toluene, and

c) the reaction time was 20 hours instead of 5 hours.

The yield was 12.7 g of copolymer of an average molecular weight above 50000. The polymerization rate was 0.1 kg copolymer/g palladium.hour.

Example 5

A carbon monoxide/propene copolymer was prepared substantially in the same way as the copolymer of Example 3, the differences being

a) the autoclave was charged with 130 ml of toluene instead of 130 ml of tertiary butanol, and

b) the autoclave was charged with a catalyst solution comprising

10 ml methanol,

20 ml toluene,

0.12 mmol palladium acetate,

0.6 mmol nickel perchlorate,

0.14 mmol 1,3-bis[bis(2-methoxyphenyl)-phosphino]propane, and

5 mmol 1,4-naphthoquinone.

The yield was 6 g of copolymer of an average molecular weight of between 6000 and 7000. The polymerization rate was 0.1 kg copolymer/g palladium.hour.

Example 6

Example 2 was substantially repeated, but with the following differences

a) the autoclave was charged with 130 ml of tertiary butanol instead of 75 ml of methanol, and

b) the catalyst solution contained 0.24 mmol perchloric acid instead of 0.3 mmol nickel perchlorate.

No polymer material was formed.  ·

Example 7

A carbon monoxide/propene copolymer was prepared substantially in the same way as the copolymer of Example 2, except for the following differences.

a) the autoclave was charged with a catalyst solution comprising

23.5 ml methanol,

1.5 ml toluene,

0.4 mmol palladium acetate,

0.4 mmol copper para-tosylate, and

0.5 mmol 1,3-bis(diphenylphosphino)propane, and

b) the reaction time was 20 hours instead of 8 hours.

The yield was 58 g of copolymer of an average molecular weight of between 3000 and 4000. The polymerization rate was 0.07 kg copolymer/g palladium.hour.

## Example 8

A carbon monoxide/propene copolymer was prepared as follows. A magnetically stirred autoclave with a content of 250 ml was charged with a catalyst solution comprising
50 ml methanol,
0.1 mmol palladium acetate,
2 mmol copper para-tosylate, and
0.15 mmol 1,3-bis(diphenylphosphino)propane.

30 ml of liquid propene was introduced into the autoclave and subsequently, carbon monoxide was pressed in until a pressure of 40 bar was reached. Finally, the contents of the autoclave were brought to 85° C. After 5 hours, the polymerization was terminated by cooling to room temperature and releasing the pressure. After the reactor contents were cooled to -20° C, the copolymer was filtered off, washed with methanol and dried in vacuo at room temperature.

The yield was 15 g of copolymer of an average molecular weight of between 1000 and 2000. The polymerization rate was 0.3 kg copolymer/g palladium.hour.

## Example 9

A carbon monoxide/propene copolymer was prepared substantially in the same way as the copolymer of Example 8, the difference being that the reaction temperature was 65° C instead of 85° C.

The yield was 4 g of copolymer of an average molecular weight of between 2000 and 3000. The polymerization rate was 0.08 kg copolymer/g palladium.hour.

## Example 10

A carbon monoxide/octene-1 copolymer was prepared substantially in the same way as the copolymer of Example 8, except for the following differences
a) the autoclave was charged with 20 ml of octene-1 instead of 30 ml of propene,
b) the reaction temperature was 90° C instead of 85° C, and
c) the copolymer was isolated by evaporation of the reaction mixture.

The yield was 6 g of copolymer of an average molecular weight of between 300 and 600. The polymerization rate was 0.12 kg copolymer/g palladium.hour.

## Example 11

A carbon monoxide/octene-1 copolymer was prepared substantially in the same way as the copolymer of Example 10, the difference being that the reaction temperature was 65° C instead of 90° C.

The yield was 1.5 g of copolymer of an average molecular weight of between 800 and 1000. The polymerization rate was 0.03 kg copolymer/g palladium.hour.

## Example 12

A carbon monoxide/propene copolymer was prepared as follows. A magnetically stirred autoclave with a content of 250 ml was charged with a catalyst solution comprising
50 ml methanol,
0.1 mmol palladium acetate,
2 mmol trifluoroacetic acid, and
0.15 mmol 1,3-bis(diphenylphosphino) propane.

After the autoclave had been flushed with carbon monoxide, it was pressurized with carbon monoxide until a pressure of 30 bar was reached and then with propene until a pressure of 38 bar was reached. Subsequently, the contents of the autoclave were brought to 90° C. After 1 hour, the polymerization was terminated by cooling the reaction mixture to room temperature and releasing the pressure.

The copolymer obtained had an average molecular weight of between 500 and 750. The polymerization rate was 0.4 kg copolymer/g palladium.hour.

## Example 13

A carbon monoxide/propene copolymer was prepared substantially in the same way as the copolymer of Example 12, the difference being that the reaction temperature was 65° C instead of 90° C.

The copolymer obtained had an average molecular weight of between 750 and 1000. The polymerization rate was 0.035 kg copolymer/g palladium.hour.

## Example 14

A carbon monoxide/butene-1 copolymer was prepared substantially in the same way as the copolymer of Example 12, the difference being that the autoclave was pressurized with carbon monoxide until a pressure of 40 bar was reached and then with butene-1 until a pressure of 45 bar was reached. The copolymer obtained had an average molecular weight of between 400 and 600. The polymerization rate was 0.25 kg copolymer/g palladium.hour.

Example 15

A carbon monoxide/butene-1 copolymer was prepared substantially in the same way as the copolymer of Example 14, the difference being that the reaction temperature was 65° C instead of 90° C.

The copolymer obtained had an average molecular weight of between 750 and 1000. The polymerization rate was 0.03 kg copolymer/g palladium.hour.

Of Examples 1-15, Examples 3-5 are examples in accordance with the invention. In these examples, carbon monoxide/propene copolymers were prepared in a diluent mixture which consisted for more than 75 %w of tert.butyl alcohol and/or toluene and for more than 5 %v of methanol, and by using a catalyst composition containing nickel perchlorate as component b) and an ortho-methoxyaryl-substituted bisphosphine as component c). The copolymers prepared by these examples satisfied the minimum requirements set both for their average molecular weights and for the reaction times. Examples 1, 2 and 6-15 fall outside the scope of the invention and have been included in the patent application for comparison. The copolymers of carbon monoxide with propene, butene-1 and octene-1 prepared in Examples 2 and 7-15 were prepared in methanol as the diluent, and/or by using a catalyst composition containing an acid as component b) and/or a non-polarly substituted bisphosphine as component c). The copolymers prepared in these examples did not satisfy the minimum requirements set both for the average molecular weight and for the reaction rate. In Example 6, no polymer was formed. In Example 1, methanol was used as the diluent to prepare a carbon monoxide/ethene copolymer which had a high average molecular weight at a high reaction rate.

The average molecular weights given in the Examples were established with the aid of $^{13}$C-NMR analysis. It was further established with the aid of $^{13}$C-NMR analysis that the carbon monoxide/alpha-olefin copolymers prepared by Examples 1-5 and 7-15 had a linear alternating structure and that therefore they consisted of units of the formula -(CO)-A'-, wherein A' represents a monomer unit derived from an alpha-olefin A used (ethene, propene, butene-1 or octene-1).

The difference in polymerization behaviour between ethene and propene is clearly shown by the comparison of the results of Examples 1 and 2. The same catalyst composition and the same diluent applied in both Example 1 and Example 2 resulted in Example 1 at 65° C in a carbon monoxide/ethene copolymer with an average molecular weight higher than 50 000, formed at a reaction rate of 3.5 kg/g.hour, and in Example 2 at 45° C in a carbon monoxide/ethene copolymer with an average molecular weight of between 3000 and 4000, formed at a reaction rate of 0.1 kg/g.hour.

The influence which the reaction temperature has on average molecular weights and reaction rates in the preparation of carbon monoxide/propene copolymers of the invention is clearly demonstrated by the comparison of the results of Examples 3 and 4. The same catalyst composition and the same diluent applied both in Example 3 and in Example 4 resulted in Example 3 at 65° C in a copolymer with an average molecular weight of between 6000 and 7000, formed at a reaction rate of 0.3 kg/g.hour, and in Example 4 at 41° C in a copolymer with an average molecular weight higher than 50 000, formed at a reaction rate of 0.1 kg/g.hour.

The influence which the reaction temperature has on average molecular weights and reaction rates in the preparation (not according to the invention) of copolymers of carbon monoxide with propene, butene-1 and octene-1 becomes evident when the results of Examples 8-15 are compared with one another in pairs (8/9, 10/11, 12/13 and 14/15). Each pair of examples was carried out substantially under the same reaction conditions, with the reaction temperature being the only difference. The examples demonstrate that in an experiment in which the minimum requirement for the reaction rate is satisfied (Examples 8, 10, 12, 14), reduction of the reaction temperature fails to result in the minimum requirement for the average molecular weight being satisfied as well (Examples 9, 11, 13, 15, respectively).

Claims

1. Process for the preparation of polymers, characterized in that a mixture of carbon monoxide with an alpha-olefin having at least 3 and at most 10 carbon atoms in the molecule is polymerized by contacting the mixture with a catalyst composition on the basis of
a) a palladium compound.
b) a non-noble transition metal salt of an acid with a pKa of less than 2, and
c) a bisphosphine of the general formula $R^5 R^6 P-R-PR^7 R^8$ wherein $R^5$, $R^6$, $R^7$ and $R^8$ represent

the same or different aryl groups, of which at least $R^5$ and $R^7$ each contain one or more polar substituents, of which at least one per aryl group is in a position ortho to the phosphorus atom to which the aryl group concerned is bound, and wherein R is a bivalent organic bridging group containing at least two carbon atoms in the bridge,
which catalyst composition is dissolved in a diluent which consists for least 75 %v of one or more aliphatic tertiary mono-alcohols containing at most 10 carbon atoms per molecule and/or of one or more aromatic hydrocarbons containing at most 10 carbon atoms per molecule, and for at least 5 %v of one or more aliphatic primary alcohols containing at most 10 carbon atoms per molecule.

2. Process as claimed in claim 1, characterized in that it is carried out at a temperature of from 40 to 120° C, an overall pressure of from 20 to 150 bar, and by using a quantity of catalyst composition containing $10^{-7}$ to $10^{-3}$ gram atom of palladium per mol of alpha-olefin to be polymerized.

3. Process as claimed in claim 2, characterized in that it is carried out at a temperature of from 50 to 100° C, an overall pressure of from 30 to 100 bar, and by using a quantity of catalyst composition containing $10^{-6}$ to $10^{-4}$ gram atom of palladium per mol of alpha-olefin to be polymerized.

4. Process as claimed in one or more of claims 1-3, characterized in that the mixture to be polymerized contains propene as the alpha-olefin.

5. Process as claimed in one or more of claims 1-4, characterized in that the diluent consists for at least 75 %v of tert.butyl alcohol and/or toluene, and for at least 5 %v of methanol.

6. Process as claimed in one or more of claims 1-5, characterized in that the catalyst composition contains a bisphosphine as component c) in which the aryl groups $R^5$, $R^6$, $R^7$ and $R^8$ are phenyl groups of which at least the groups $R^5$ and $R^7$ are ortho-polarly substituted, as defined in claim 1.

7. Process as claimed in one or more of claims 1-6, characterized in that the catalyst composition contains a bisphosphine as component c) in which the polar sustituents are alkoxy groups, such as methoxy groups.

8. Process as claimed in claims 6 and 7, characterized in that the catalyst composition contains 1,3-bis[bis(2-methoxyphenyl)phosphino]propane, as component c).

9. Process as claimed in one or more of claims 1-8, characterized in that, in addition, a 1,4-quinone, such as a 1,4-benzoquinone or a 1,4-naphthoquinone, is present in the catalyst composition as a component d).